# EUROPÄISCHE PATENTANMELDUNG

(11) **EP 2 803 590 A1**
(43) Veröffentlichungstag der Anmeldung: **19.11.2014**
(21) Anmeldenummer: 14165115.8
(22) Anmeldetag: 17.04.2014
(51) Int. Cl.: B65B 13/22, B65B 27/04, G01L 5/04

(54) **Verfahren und Vorrichtung zur Herstellung von Umreifungsgebinden sowie Messanordnung zur Erfassung einer Bandspannung solcher Umreifungsgebinde**

(30) Priorität: 16.05.2013 DE 102013209151
(71) Anmelder: Krones Aktiengesellschaft, 93073 Neutraubling (DE)
(72) Erfinder: Kieslinger, Manfred, 93073 Neutraubling (DE); Fiegler, Rudolf, 93073 Neutraubling (DE); Elsperger, Stefan, 93073 Neutraubling (DE); Gut, Thorsten, 93073 Neutraubling (DE)
(74) Vertreter: Benninger, Johannes

(57) **Zusammenfassung**

Es sind ein Verfahren und eine Vorrichtung (84) zur Herstellung von Umreifungsgebinden (10) offenbart. Hierbei werden mindestens zwei Artikel (12) oder Behälter (14) mit wenigstens einer horizontal um jeweilige Außenseiten der Artikel (12) oder Behälter (14) gespannten, band- oder streifenartigen, geschlossenen Umreifung (18) zusammengehalten und miteinander verbunden. Die Umreifung (18) wird durch ein, zwei oder mehr gleichartige oder unterschiedliche Umreifungsbänder (20) aus Kunststoff oder einem Verbundmaterial gebildet, deren Enden unter Aufbringung einer definierbaren Bandspannung (48) aneinander fixiert werden, wonach die Bandspannung (48) des wenigstens einen Umreifungsbandes (20) der Umreifung (18) durch eine mechanische Auslenkung des Umreifungsbandes (20) unter gleichzeitiger Erfassung eines Zusammenhanges zwischen dem Auslenkungsweg und einer hierfür aufzuwendenden Auslenkungskraft gemessen wird.

Die Erfindung umfasst weiterhin eine Messanordnung (46) zur Erfassung einer Bandspannung (48) von derartigen Umreifungsgebinden (10). Die Messanordnung (46) weist eine Einrichtung (40) zur Auslenkung des wenigstens einen Umreifungsbandes (20) der Umreifung (18) sowie eine Einrichtung (56) zur Kraft- und/oder Wegmessung während der Auslenkung auf.

## Beschreibung

Die vorliegende Erfindung betrifft ein Verfahren und eine Vorrichtung zur Herstellung von Umreifungsgebinden, die jeweils mindestens zwei miteinander verbundene Artikel wie bspw. Flüssigkeitsbehälter umfassen, die mit einer horizontal um eine Außenseite der Artikel oder Behälter gespannten, band- oder streifenartigen Umreifung zusammengehalten sind. Weiterhin betrifft die Erfindung eine Messanordnung zur Erfassung einer Bandspannung solcher Umreifungsgebinde.

Der Aufbau und die Eigenschaften solcher Umreifungsgebinde gehen aus der internationalen Patentanmeldung WO 2011/045440 A1 hervor. Neben diesen bekannten Umreifungsgebinden sind verschiedene weitere Möglichkeiten bekannt und gebräuchlich, einzelne Artikel zu größeren Gebinden zusammenzufassen. So werden bspw. Getränkebehälter oftmals mittels Schrumpffolien zu stabilen, transportablen Gebinden von vier, sechs oder mehr Behältern zusammengefasst und verpackt. Die Herstellung solcher Umreifungs- oder Schrumpfgebinde ist aus praktischen Erwägungen meist unumgänglich, da sie die häufigste Variante von Verkaufseinheiten für Getränkebehälter und Flaschen aus PET-Kunststoff darstellen. Diese Gebinde werden für den Transport zum Zwischen- und/oder Endhandel teilweise zu sog. Großgebinden zusammengefasst und/oder in Lagen zusammengestellt und palettiert.

Die für Umreifungsgebinde eingesetzten Umreifungsbänder können wahlweise aus Metall bestehen. Üblicherweise werden jedoch Bänder aus Kunststoff, insbesondere aus PET eingesetzt, die unter Vorspannung an einer Überlappungsstelle miteinander verschweißt oder verklammert werden. Diese Umreifungsbänder aus Kunststoff lassen sich leicht unter Vorspannung verschweißen und mit gewissem Kraftaufwand unter Zerstörung der verschweißten Verbindungsstelle vom Endkunden wieder lösen, wenn einzelne Behälter vom Gebinde getrennt werden sollen.

Da die nach dem Aufbringen des Umreifungsbandes und nach dem Verschweißen bestehende Bandspannung ein wesentliches Qualitätsmerkmal des Gebindes bildet, ist der Herstellung einer ausreichenden, nicht zu hohen Bandspannung eine gewisse Sorgfalt zu widmen, was in aller Regel durch geeignete Messeinrichtungen in den eingesetzten Umreifungsapplikatoren erfolgen kann. Auf diese Weise kann bereits bei der Umhüllung der Behälter mit dem Umreifungsband für die erforderliche Bandspannung gesorgt werden, die schließlich durch das Verschweißen oder Verkleben des Umreifungsbandes unveränderlich fixiert wird.

Die EP 2 206 650 A1 offenbart eine Vorrichtung zur Ermittlung der Spannung eines Umreifungsbandes, das durch eine Packstückumreifungsmaschine aufgebracht wird. Eine Umlenkrolle, die einen gespannten Abschnitt eines Umreifungsbandes umlenkt, ist in einer Konsole drehbar gelagert, die sich gegenüber einem Maschinengehäuse oder Rahmenabschnitt der Maschine über eine Kraft- oder Druckmessdose abstützt. Auf diese Weise kann die im Umreifungsband herrschende Zugkraft erfasst werden, um auf diese Weise die Bandspannung während der Aufbringung des Umreifungsbandes zu regulieren.

Die EP 2 489 597 A1 beschreibt weiterhin eine Vorrichtung und ein Verfahren zur Herstellung von umreiften Gebinden sowie ein Regelungs- und/oder Steuerungsverfahren für eine Umreifungsvorrichtung. Die Vorrichtung umfasst Einrichtungen zur Erfassung von Eigenschaften der zu umreifenden Artikel, die mit einer Einrichtung zur Erzeugung einer definierten Spannkraft der Umreifung gekoppelt sind. Auf diese Weise soll insbesondere in Abhängigkeit der Artikelnachgiebigkeit eine passende Umreifungsspannung eingestellt werden, um eine zu hohe oder zu niedrige Bandspannung zu vermeiden.

Sofern die Bandspannung nach dem Aufbringen der Umreifung dennoch zu hoch oder zu gering ist, eignet sich das Gebinde oftmals nicht mehr für einen Verkauf und muss zur Entfernung der den Vorgaben nicht entsprechenden Umreifung und zur Aufbringung einer neuen Umreifung aus dem laufenden Produktions- und/oder Verpackungsprozess ausgesondert werden.

Um diesen Nachteil zu vermeiden, besteht das vorrangige Ziel der vorliegenden Erfindung darin, ein einfach handhabbares und kostengünstiges Verfahren sowie eine entsprechende Vorrichtung zur Verfügung zu stellen, mit denen sich eine Bandspannung bei einem Umreifungsgebinde schnell und zuverlässig, vorzugsweise in einem laufenden Produktions- oder Transportprozess, erfassen lässt.

Dieses Ziel der Erfindung wird mit den Gegenständen der unabhängigen Patentansprüche erreicht, wobei sich Merkmale vorteilhafter Weiterbildungen der Erfindung aus den abhängigen Ansprüchen ergeben. Zur Erreichung des Ziels schlägt die vorliegende Erfindung ein Verfahren zur Herstellung von Umreifungsgebinden vor, bei dem jeweils mindestens zwei Artikel mit wenigstens einer horizontal um jeweilige Außenseiten der Artikel gespannten, band- oder streifenartigen, geschlossenen Umreifung zusammengehalten und miteinander verbunden werden. Die Umreifung wird hierbei durch ein, zwei oder mehr gleichartige oder unterschiedliche Umreifungsbänder aus Kunststoff oder einem Verbundmaterial gebildet, deren Enden unter Aufbringung einer definierbaren Bandspannung aneinander fixiert werden, wonach die Bandspannung des wenigstens einen Umreifungsbandes der Umreifung durch ein Messverfahren ermittelt wird, bei dem das Umreifungsband mechanisch ausgelenkt wird, wobei gleichzeitig ein Zusammenhang zwischen der Auslenkung und einer hierfür aufzuwendenden Auslenkungskraft gemessen wird. Die mechanische Auslenkung kann insbesondere mit Hilfe eines Schiebers oder eines anderen Linearantriebs erfolgen, mit dem senkrecht oder in einem vorgegebenen Winkel eine Kraft auf das Umreifungsband ausgeübt wird, wobei gleichzeitig dessen Auslenkung und Nachgiebigkeit erfasst und ausgewertet wird. Vorzugsweise erfolgt die Auslenkung des Umreifungsbandes voll mechanisch, während die Erfassung des Auslenkungswegs wahlweise rein mechanisch, optisch, induktiv, akustisch oder auf anderem Wege erfolgen kann, bspw. durch Erfassung der Bandbewegungen während und nach erfolgter Auslenkung.

Wenn auch im vorliegenden Zusammenhang meist von Artikeln die Rede ist, aus denen ein Umreifungsgebinde gebildet ist, so sei an dieser Stelle vorsorglich erwähnt, dass damit grundsätzlich alle Arten von Stückgütern, insbesondere jedoch Behälter, Flüssigkeitsbehälter oder Getränkebehälter gemeint sein können, ohne dass dies jeweils gesondert erwähnt ist.

Grundsätzlich kann bei dem Verfahren das Umreifungsband um einen definierten maximalen Auslenkungsweg ausgelenkt und die hierfür aufzuwendende Auslenkungskraft gemessen werden. Ebenso ist es möglich, das Umreifungsband mit einer definierten maximalen Auslenkungskraft auszulenken und währenddessen den hierdurch erzielten Auslenkungsweg zu messen. Eine einfache Variante des erfindungsgemäßen Verfahrens kann vorsehen, dass die mechanische Auslenkung von einer Kraftmessung mit einem Kraftsensor oder einem Drucksensor begleitet wird, dessen/ deren Sensorsignale zur Erfassung der Bandspannung ausgewertet werden. In diesem Fall ist es sinnvoll, einen definierten Auslenkungsweg vorzugeben und die hierfür aufzuwendende Kraft zu messen. Diese Kraftmessung kann grundsätzlich auch ohne separate Sensoren erfolgen, bspw. auf der Grundlage der für den Antrieb eines elektrischen Linearmotors aufzuwendenden Leistung, da diese Leistungsaufnahme während einer Antriebsbewegung eines solchen Linearantriebs einen direkten Rückschluss auf den Widerstand und damit die aufzuwendende Antriebskraft erlaubt. Ähnliches gilt für einen hydraulischen Linearantrieb, bei dem ein Druckverlauf im Hydrauliksystem einen Rückschluss auf die für die Auslenkung des Umreifungsbandes aufzuwendende Kraft erlaubt.

Zur Auslenkung des Umreifungsbandes kann bspw. ein linear beweglicher mechanischer Stößel oder Schieber eingesetzt werden. Besonders gut kann auch ein drehbar gelagerter Hebel eingesetzt werden, der als Stößel fungiert und mit seinem Kopf mit definierter Eindrückkraft auf einer definierten Stelle der Umreifung auftreffen und diese auslenken kann. Darüber hinaus können sich auch andere Varianten zur Herstellung einer Eindrückkraft eignen.

Wenn im vorliegenden Zusammenhang meist von einer Auslenkung durch Eindrücken des Umreifungsbandes die Rede ist, so ist dies grundsätzlich nicht einschränkend zu verstehen, da eine Auslenkung nach außen durch Ziehen am Umreifungsband mit einem Haken o. dgl. grundsätzlich denselben Zusammenhang zwischen Auslenkungsweg und hierfür aufgewendeter Zugkraft liefert, woraus sich die Bandspannung der Umreifung ermitteln lässt, wie dies bei einer Eindrückung der Fall ist. Aus diesem Grund sei hiermit klargestellt, dass immer dann, wenn von Auslenkung oder Eindrückung die Rede ist, gleichermaßen eine Auslenkung durch Aufbringung einer Zugkraft an der Umreifung gemeint sein kann.

Zur Erfassung des Zusammenhangs zwischen Auslenkung und Druck- bzw. Zugkraft eignen sich die erwähnten Sensoren, die bspw. innerhalb des Schiebers oder Stößels angeordnet oder mit diesen gekoppelt sein können. Wahlweise kann auch die Antriebsleistung für den Schieber oder den Stößel zur Auslenkung des Umreifungsbandes erfasst werden, woraus sich die Bandspannung ermitteln lässt. Das Messprinzip beruht im Wesentlichen darauf, dass durch den verwendeten Schieber oder Stößel das Umreifungsband quer zur Transportrichtung des Umreifungsgebinde oder auch in Transportrichtung ausgelenkt und eingedrückt wird, ohne dass hierdurch das Gebinde verschoben wird. Letzteres wird durch eine geeignet geringe Masse des Stößels oder Schiebers erreicht, die nicht ausreicht, um das Gebinde zu verschieben. Die Antriebsleistung des Stößels und/oder Schiebers für die Auslenkung des Bandes sowie die Auslenkung selbst kann gemessen werden. Je härter das Umreifungsband gespannt ist, desto größer ist die aufzuwendende Kraft und/oder desto geringer ist die Auslenkung selbst. Aus diesen Zusammenhängen kann die Bandspannung ermittelt werden. Der Stößel oder Schieber kann wahlweise linear oder in rotatorischer Bewegung arbeiten. Die Auslenkung kann über Federkraft, motorisch oder pneumatisch erzeugt werden. Anhand der Messung können die Bandspannung oder andere relevante Parameter automatisch oder manuell nachgeführt bzw. geändert werden. Bei einer sinnvollen Variante kann auch eine drehbare Rolle an der Stirnseite des Schiebers oder Stößels angeordnet sein, der am Band abrollen kann, wodurch das Gebinde während seiner Transportbewegung nicht beeinträchtigt oder verschoben wird.

Optional kann aus der Erfassung der Bandspannung auch der Innendruck bzw. die Härte der zu umreifenden Behälter hergeleitet bzw. grob überschlagen werden, was eine zusätzliche Einflussnahme auf weitere Prozessparameter erlaubt, bspw. auf einen einzustellenden Fülldruck oder einen Begasungsdruck etc.

Vorzugsweise wird bei dem erfindungsgemäßen Verfahren die Bandspannung innerhalb eines vorgebbaren Bandabschnittes des Umreifungsbandes gemessen, der sich ungefähr mittig zwischen zwei benachbarten Artikeln des vom Umreifungsband zusammengehaltenen Umreifungsgebindes befindet. Auf diese Weise können reproduzierbare Messwerte erwartet und generiert werden, die einen eindeutigen Rückschluss auf die Bandspannung erlauben und deshalb ein eindeutiges Messsignal liefern, das Auskunft über die Umreifungsqualität geben kann.

Um jedes einzelne Gebinde hinsichtlich seiner Bandspannung zu überprüfen, kann die Bandspannung wenigstens eines Umreifungsbandes jedes Umreifungsgebindes einer Folge von nacheinander umreiften und hintereinander transportierten Umreifungsgebinden erfasst und zur Steuerung einer Ausschleuseinrichtung herangezogen werden, was es erlaubt, die betroffenen Umreifungsgebinde aus dem Gebindestrom auszusondern, bei denen eine erfasste Bandspannung außerhalb eines vorgebbaren Sollbereichs liegt. Bei der Erfassung der Bandspannung wird ermittelt, ob diese innerhalb eines Sollwertbereichs liegt. Ist dies der Fall, handelt es sich um ein einwandfreies Gebinde. Wird der Sollwert verfehlt, kann das Gebinde problemlos aus dem stetigen Förderprozess ausgesondert werden, ohne dass die übrigen Gebinde hierdurch beeinflusst oder deren Transport beeinträchtigt wird. Somit wird in vorteilhafter Weise ein stetiges Messverfahren zur Verfügung gestellt, dass während eines Gebindetransports durchgeführt werden kann. Auf diese Weise können "schlecht umreifte" Gebinde während ihres stetigen Transports ausgesondert und bspw. einer Nachbesserung zugeführt werden.

Weiterhin umfasst die vorliegende Erfindung ein Verfahren zur Erfassung einer Bandspannung von Umreifungsgebinden, die jeweils mindestens zwei Artikel oder Behälter umfassen, die mit wenigstens einer horizontal um die Außenseiten der Artikel oder Behälter gespannten, band- oder streifenartigen, geschlossenen Umreifung zusammengehalten und miteinander verbunden sind, wobei die Umreifung durch ein, zwei oder mehr gleichartige oder unterschiedliche Umreifungsbänder aus Kunststoff oder einem Verbundmaterial gebildet ist, deren Enden mit definierbarer Bandspannung aneinander fixiert sind. Bei diesem Mess- oder Erfassungsverfahren wird die Bandspannung des wenigstens einen Umreifungsbandes der Umreifung durch eine kontrollierte mechanische Auslenkung des Umreifungsbandes unter gleichzeitiger Erfassung eines Zusammenhanges zwischen dem Auslenkungsweg und einer hierfür aufzuwendenden Auslenkungskraft gemessen. Alle oben genannten Ausführungsvarianten und Verfahrensparameter, die sich auf das erfindungsgemäße Verfahren zur Herstellung eines Umreifungsgebindes beziehen, betreffen gleichermaßen das hier erwähnte Messverfahren.

Zur Erreichung des oben genannten Ziels schlägt die Erfindung zudem eine Vorrichtung zur Herstellung von Umreifungsgebinden mit den Merkmalen des unabhängigen Anspruchs 6 vor. Diese Umreifungsgebinde umfassen jeweils mindestens zwei Artikel oder Behälter und wenigstens eine horizontal um Außenseiten der Artikel oder Behälter gespannte, band- oder streifenartige, geschlossene Umreifung zur Verbindung und Fixierung der Artikel oder Behälter aneinander. Die Vorrichtung umfasst eine Fördereinrichtung zur ununterbrochenen oder zyklischen Förderung von Artikel- oder Behältergruppen zu einer Umreifungseinrichtung, die zur Aufbringung von einem, zwei oder mehr gleichartigen oder unterschiedlichen Umreifungsbändern aus Kunststoff oder einem Verbundmaterial um die Außenseiten der Artikel oder Behälter unter gleichzeitiger Aufbringung einer definierbaren Bandspannung und anschließender Fixierung von Bandenden aneinander zur Herstellung der Umreifung vorbereitet und ausgestattet ist. Zudem umfasst die erfindungsgemäße Vorrichtung eine Messeinrichtung zur Erfassung der Bandspannung, die eine Einrichtung zur Auslenkung des wenigstens einen Umreifungsbandes der Umreifung sowie eine Einrichtung zur Kraft- und/oder Wegmessung an der Auslenkungseinrichtung während deren Auslenkung. D.h., es wird der Auslenkungsweg und gleichzeitig die für die Auslenkung erforderliche bzw. aufzuwendende Kraft erfasst, wonach aus dem gemessenen Zusammenhang die effektive Bandspannung des Umreifungsgebindes ermittelt bzw. errechnet wird.

Die Einrichtung zur Auslenkung des Umreifungsbandes kann bspw. einen linear oder rotatorisch beweglichen, mechanisch wirkenden Stößel oder Schieber umfassen, wodurch die mechanische Auslenkung des Bandes aufgebracht werden kann, dessen Weg und Kraft erfasst und ausgewertet werden kann. Die Einrichtung zur Erfassung der Auslenkung sowie der hierfür aufgewendeten Kraft kann bspw. einen Wegsensor, einen Kraftsensor, einen Drucksensor o. dgl. umfassen, der/die mit einer Auswerteschaltung zur Erfassung und Auswertung der Sensorsignale und zur Herleitung der Bandspannung gekoppelt ist/sind. Die Ausführungsvariante der erfindungsgemäßen Vorrichtung kann zur Durchführung des oben beschriebenen Verfahrens zur Bandspannungsmessung dienen, so dass die dort erläuterten Verfahrensparameter gleichermaßen für die hier in verschiedenen Ausführungsvarianten beschriebene Vorrichtung zur Herstellung von Umreifungsgebinden gelten. Sinnvollerweise sind die Schieber bzw. die Einrichtungen zur Aufbringung der Bandauslenkung so angeordnet, dass die Auslenkung und damit auch die Bandspannung innerhalb eines vorgebbaren Bandabschnittes des Umreifungsbandes gemessen wird, der sich ungefähr mittig zwischen zwei benachbarten Artikeln des vom Umreifungsband zusammengehaltenen Umreifungsgebindes befindet. Auf diese Weise können reproduzierbare Messergebnisse gewährleistet werden, die bei aufeinander folgenden Gebinden jeweils gleiche Messwerte liefern können, sofern die Bandspannungswerte jeweils übereinstimmen.

Eine sinnvolle Ausführungsvariante kann eine drehbar gelagerte Rolle an einem stirnseitigen Ende des linear beweglichen oder um einen Drehpunkt verschwenkbaren Schiebers aufweisen, die unter minimaler Reibung auf der Oberfläche des Umreifungsbandes abrollen und auf diese Weise für die Ermittlung der Bandspannung sorgen kann. Das Umreifungsband kann auch bei kontinuierlich befördertem Gebinde mit einem solchermaßen ausgebildeten Schieberelement problemlos abgetastet werden, da der Schieber mit der daran angeordneten Rolle in den Bereichen gegen das zumindest geringfügig nachgiebige Band drücken kann, wo es nicht an den Außenseiten der Behälter anliegt, sondern Zwischenräume zwischen benachbarten Behältern überbrückt.

Wenn der verschiebbare oder schwenkbare Hebel oder Schieber mit einem elektromotorischen oder hydraulischen Antrieb versehen ist, kann durch Aufbringung einer konstanten Kraft, mit der gegen die Umreifung des Gebindes gedrückt wird, sichergestellt werden, dass ein straff gespanntes Umreifungsband nicht so stark eingedrückt wird wie ein schwächer gespanntes Band. Auf diese Weise können Beschädigungen oder ein seitliches Verschieben der Gebinde zuverlässig vermieden werden. Das Maß der Eindrückung kann bei konstanter Eindrückkraft durch eine gleichzeitige Wegmessung einen Wert für die zu messende Bandspannung liefern, ohne dass eine aufwändige Datenverarbeitung erforderlich wäre.

Grundsätzlich kann auch ein Längenmaß für die Eindrückung des Umreifungsbandes vorgegeben werden, bei dessen Erreichung die hierfür notwendige Maximalkraft des Schieberelements oder Hebels gemessen werden kann. Auch aus einer solchen Messung lässt sich unmittelbar die Bandspannung der Umreifung herleiten, ohne dass hierfür eine aufwändige Messwert- oder Datenverarbeitung notwendig wäre. Da jedoch bei relativ straff gespanntem Band eine definierte Eindrückung um ein bestimmtes Maß mit dem Risiko einer unzulässig hohen Kraftbeaufschlagung beim Eindrückvorgang verbunden ist, dürfte die oben genannte Alternative, bei der der Weg der Eindrückung bei konstant vorgegebener Eindrückkraft erfasst wird, in der Praxis sinnvoller einzusetzen sein.

Wahlweise können die Gebinde mittels geeigneter Horizontalfördereinrichtungen und/oder mit einem an einer Rückseite des Gebindes anliegenden Schieber, bspw. einem Schubbalken oder einer Schubstange o. dgl., in Transportrichtung bewegt werden. Um jedes seitliche Ausweichen der Gebinde bei einem Messvorgang zu verhindern, kann eine seitliche Führung in Form einer Führungsleiste oder Anlageleiste o. dgl. vorgesehen sein, an der sich die Gebinde abstützen können, wenn sie mit der Einrichtung zur Auslenkung beaufschlagt werden.

Die erfindungsgemäße Vorrichtung kann vorteilhaft mit einer steuerbaren Ausschleuseinrichtung gekoppelt sein, die Umreifungsgebinde aus dem Gebindestrom aussondert, bei denen eine erfasste Bandspannung außerhalb eines vorgebbaren Sollbereichs liegt. Diese Ausschleuseinrichtung kann bspw. durch einen Schieber, eine schwenkbare Klappe, eine verstellbare Weiche im Förderweg o. dgl. gebildet sein.

Die vorliegende Erfindung umfasst schließlich eine Messanordnung zur Erfassung einer Bandspannung von Umreifungsgebinden, die jeweils mindestens zwei Artikel oder Behälter mit wenigstens einer horizontal um Außenseiten der Artikel oder Behälter gespannten, band- oder streifenartigen, geschlossenen Umreifung zur Verbindung und Fixierung der Artikel oder Behälter aneinander umfassen. Diese erfindungsgemäße Messanordnung weist eine Einrichtung zur Auslenkung des wenigstens einen Umreifungsbandes der Umreifung sowie eine Einrichtung zur Kraft- und/oder Wegmessung während der Auslenkung auf. Diese letztgenannte Einrichtung dient somit der Erfassung eines Zusammenhangs zwischen der mechanisch ausgelösten Auslenkung des Bandes, dem Auslenkungsweg sowie der hierfür aufzubringenden Auslenkungskraft, woraus die Bandspannung abgeleitet werden kann. Hierbei kann die Einrichtung zur Auslenkung des Bandes einen linear oder rotatorisch beweglichen, mechanisch wirkenden Stößel oder Schieber umfassen. Die Einrichtung zur Erfassung des Weges und/oder der Kraft kann bspw. ein Wegsensor, ein Kraftsensor, ein Drucksensor o. dgl. Sensor sein, der/die mit einer Auswerteschaltung zur Erfassung und Auswertung der Sensorsignale und zur Herleitung der Bandspannung gekoppelt ist/sind. Dabei kann eine integrierte Bauweise des Kraft- und/oder Wegsensors in dem für die Auslenkung verantwortlichen Schiebers oder Schieberelements vorgesehen sein.

Es ist eine bekannte Verpackungsart, Flaschen und Flüssigkeitsbehälter wie Getränkebehälter in Formationen von z.B. 2x3 oder 2x2 Flaschen oder Behältern zu gruppieren und mit einem Band zu Gebinden zusammenzuspannen. Die Qualität solcher sog. Umreifungsgebinde bemisst sich an der Spannkraft des Bandes, welches die Flaschen oder Behälter umschließt. Da die häufig verwendeten PET-Behälter relativ dünnwandig und damit nachgiebig sind, ist sowohl eine zu straff gespannte Umreifung aufgrund der mechanischen Belastung der Behälter als auch eine zu schwach gespannte Umreifung aufgrund des ungenügenden Zusammenhaltes der einzelnen Behälter im Gebinde zu vermeiden. Aus diesem Grund schlägt die Erfindung vor, bei einzelnen Gebinden, vorzugsweise jedoch bei allen Gebinden innerhalb eines Förderstroms, die effektive Bandspannung nach der Aufbringung des Gebindes im Interesse einer umfassenden Qualitätskontrolle vor der Endverpackung der Gebinde zu erfassen.

Durch einen Schieber, Stößel oder schwenkbaren Hebel wird das Band quer zur Transportrichtung oder in Transportrichtung eingedrückt bzw. ausgelenkt, ohne dabei das Gebinde zu verschieben. Letzteres wird durch eine an die Masse des Gebindes angepasste Masse und/oder Schiebekraft des Stößels oder Schiebers erreicht. Der Zusammenhang zwischen aufgewendeter Kraft und Auslenkungsweg des Bandes wird gemessen. Je härter das Band gespannt ist, desto geringer ist der Auslenkungsweg bei gegebener Kraft bzw. desto größer ist die aufzuwendende Kraft für einen vorgegebenen Auslenkungsweg des Bandes. Aus den erfassten Werten und ihrer Bezugsetzung kann die Bandspannung ermittelt werden. Die Auslenkung und die Auslenkungskraft können bspw. sensorisch mit verschiedenen Mitteln erfasst werden. So können sich einfache Druck- oder Kraftsensoren zur Erfassung der Auslenkungskraft eignen. Auch eine einfache Wegerfassung ist möglich. Wahlweise können die Schieber oder Hebel linear oder rotatorisch arbeiten. Die Auslenkung kann über Federkraft, motorisch oder pneumatisch erfolgen. Anhand der Messung kann die Bandspannung oder andere relevante Parameter automatisch oder manuell nachgeführt bzw. geändert werden. Wahlweise kann hierbei auch der Innendruck bzw. die Härte der zu umreifenden Flasche bzw. der Behälter erfasst bzw. grob überschlagen werden, woraus weitere Prozessparameter beeinflusst werden können.

Bei allen oben erwähnten Messverfahren zur Abtastung der Bandspannung kann eine Auslösung der elektromotorisch oder hydraulisch aktivierbaren Schieberelemente, Schwenkhebel o. dgl. bspw. mittels Lichtschranken erfolgen, so dass ein entlang der Transportrichtung bewegtes Gebinde durch Auslösung eines Lichtschrankensignals einen Messvorgang zum richtigen Zeitpunkt initiieren kann. Der Schieber kann mit einer konstanten Beschleunigung ausfahren, bis er auf das Umreifungsband trifft, idealerweise in die Lücke zwischen zwei Behältern. Hierfür kann bspw. ein elektrischer Linearmotor zum Einsatz kommen, der den Schieber senkrecht zum Umreifungsband antreiben kann. Bei Berührung des Bandes wird mit einem konstanten Strom weiter gefahren. Der Strom ist direkt proportional zur Kraft, d.h. der Läufer drückt mit einer konstanten Kraft auf das Band. Eine Steuerschaltung für den Linearmotor ermittelt die Eintauchtiefe des Läufers in das Band, die sich durch die konstante Kraft ergibt. Die möglichen Ergebnisse dieser Messung können wie folgt sein: die Eintauchtiefe ist um einen bestimmten Betrag geringer als ein vorgegebener unterer Schwellwert oder gleich diesem unteren Schwellwert; dies bedeutet, dass die Spannung des Bandes entweder zu hoch ist oder korrekt sein kann. Ein zu geringer Betrag der Eintauchtiefe, d.h. ein Eintauchwert unterhalb eines definierten unteren Schwellwertes kann jedoch zu einem Ausschuss des Gebindes führen, da in diesem Fall die gemessene Bandspannung zu hoch ist. Wenn die Eintauchtiefe größer ist als ein oberer Schwellwert, so bedeutet dies normalerweise, dass die Spannung des Bandes zu gering ist, was einem Qualitätsmangel entspricht. Als dritte Möglichkeit kann der Läufer innerhalb eines zuvor eingestellten Fensters kein Band berühren oder erfassen, so dass keine Umschaltung von einer Beschleunigung auf eine Kraftwirkung erfolgen kann. Dies kann insbesondere bedeuten, dass an der vorgesehenen Stelle am Gebinde kein Band vorhanden ist, so dass u.U. wegen fehlender Umreifung gar kein Gebinde hergestellt wurde. Wie erwähnt, kann wahlweise auch die Kraft gemessen werden, die notwendig ist, um eine gewisse Eintauchtiefe zu erreichen. Es ist auch möglich, in einem ersten Schritt mit dem Läufer den ersten Behälter zu berühren und in einem zweiten Schritt die Eintauchtiefe des Läufers zwischen zwei Behältern zu prüfen, wobei beide Schritte mit konstanter Kraft erfolgen. Die Differenz zwischen den beiden Werten wird mit einer zuvor festgelegten Schwelle verglichen. Bei dieser Messung ist eine exakte Führung des Gebindes entscheidend, da schief einlaufende Gebinde zu einer falschen Messung führen können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante eines Umreifungsgebindes mit insgesamt sechs mittels eines Umreifungsbandes zusammengehaltenen Behältern.
Fig. 2 zeigt eine Seitenansicht eines Umreifungsgebindes.
Fig. 3 zeigt eine schematische Perspektivansicht eines Transportabschnittes einer Handhabungs-, Verpackungs- und/oder Fördervorrichtung mit Horizontalfördereinrichtungen zum Gebindetransport.
Fig. 4a zeigt eine schematische Perspektivdarstellung einer Messanordnung zur Messung einer Bandspannung der Umreifung.
Fig. 4b zeigt eine schematische Draufsicht auf die Anordnung gemäß Fig. 4a.
Fig. 5a zeigt eine schematische Perspektivansicht der aktivierten Messanordnung gemäß Fig. 4a.
Fig. 5b zeigt eine schematische Draufsicht auf die Anordnung gemäß Fig. 5a.
Fig. 6 zeigt eine alternative Ausführungsvariante der Messanordnung mit einer modifizierten Einrichtung zur Auslenkung der Umreifungsbänder der Gebinde.
Fig. 7 zeigt in fünf schematischen Ansichten (Fig. 7a bis Fig. 7e) jeweils aufeinander folgende Prozessschritte eines Messvorganges zur Erfassung der Bandspannung, der mit der Messanordnung gemäß Fig. 6 durchgeführt wird.
Fig. 8 zeigt eine Ausführungsvariante einer erfindungsgemäßen Vorrichtung zur Herstellung von Umreifungsgebinden mit einer Messanordnung zur Erfassung der Bandspannung der Umreifungsgebinde.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Bei den nachfolgend beschriebenen Umreifungsgebinden 10 bzw. den nachfolgend beschriebenen Verkaufseinheiten sind jeweils mehrere Artikel 12 zu Gebinden 10 zusammengefasst. Die Artikel 12 sind hierbei jeweils durch zusammengefasste Getränkebehälter 14 gebildet. Die Gebinde 10 werden durch Umreifen der Behälter 14 mit Hilfe von flexiblen Bändern aus Kunststoff oder aus anderen Materialien, insbesondere aus PP oder PET gebildet. Grundsätzlich sind mit der aufgezeigten Verbindungsart "Behälterumreifen" alle denkbaren geometrischen Anordnungen der Behälter 14 möglich: Lineare Matrixanordnung in einer n x m-Anordnung von Zeilen und Spalten für runde oder rechteckige, quadratische oder andere Behälter sowie z.B. Kugelpackungen im 30°- bzw. 60°-Winkel bei runden Behältern 14 in beliebiger Anzahl. Die Anordnung der Gebinde 10 und ihrer Artikel 12 oder Behälter 14 ist abhängig von der Zuführung der Behälter 14 und deren Einteilung durch sog. Behältereinteiler innerhalb eines hier nicht näher ausgeführten Zuführabschnittes.

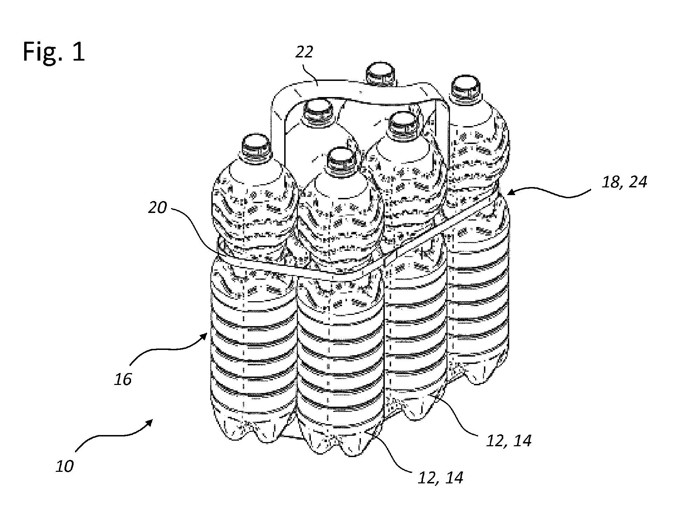

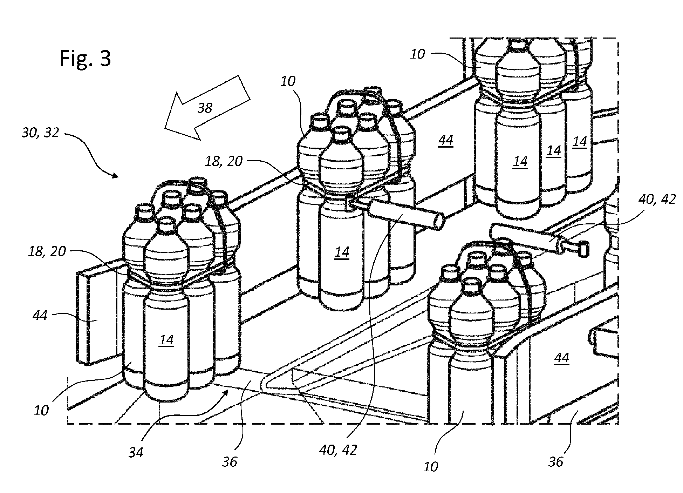

Die Fig. 1 zeigt eine perspektivische Ansicht eines solchen Umreifungsgebindes 10. Bei der Gebindeanordnung sind die Artikel 12 bzw. Behälter 14 nebeneinander in einer sog. Längsformation angeordnet. Das Gebinde 10 setzt sich im vorliegenden Beispiel aus sechs miteinander verbundenen PET-Behältern 14 zusammen, die mit einer horizontal um eine Außenseite 16 der PET-Behälter 14 gespannten, band- oder streifenartigen Umreifung 18 zusammengehalten sind. Die Umreifung 18 ist durch ein flaches Umreifungsband 20 aus Kunststoff gebildet, das um die Artikel 12 bzw. Behälter 14 gespannt und mit seinen überlappenden freien Enden unter Aufbringung einer Vorspannung fixiert ist. Die Umreifung 18 bzw. das Umreifungsband 20 ist an der Kontaktstelle mittels einer stoffschlüssigen Verbindung, bspw. in Form wenigstens einer Schweißverbindung oder einer Klebeverbindung fixiert. Wahlweise kann zudem ein schlaufenartiger Tragegriff 22 vorgesehen sein, der die Oberseiten des Gebindes 10 in schräger bzw. diagonaler Richtung überspannt. Der Tragegriff 22 kann jedoch wahlweise auch außen um das Umreifungsband 20 herumgeführt und dort eingehängt sein, wie dies in den Figuren 3 bis 5a beispielhaft verdeutlicht ist. Auch geklebte Tragegriffvarianten sind möglich, ebenso wie ein optionaler Verzicht auf den Tragegriff.

Im gezeigten Ausführungsbeispiel ist die Umreifung 18 in einem oberen Bereich um die Behälter 14 gespannt und liegt in einer sog. Griffmulde 24, durch welche die Behälter 14 tailliert sind. Wie es die schematische Darstellung der Fig. 1 erkennen lässt, sind die Behälter 14 in einer Weise gruppiert, dass sich eine hexagonal dichte Kugelpackung und damit eine sog. Diagonalformation im Gebinde 10 ergibt.

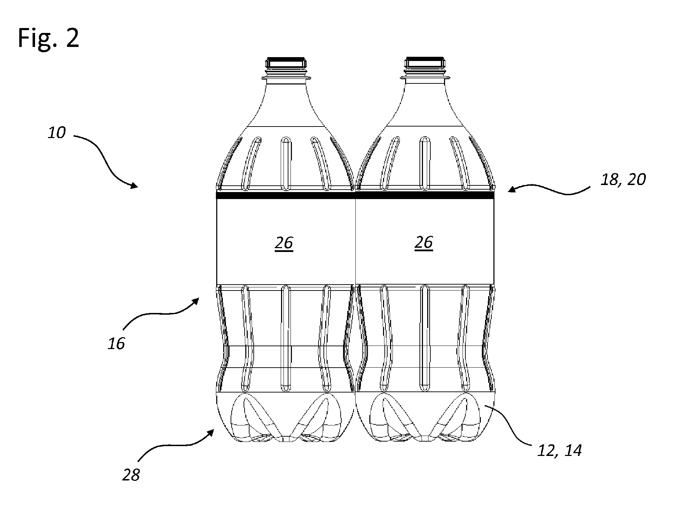

Wie es die schematische Seitenansicht der Fig. 2 zeigt, kann die Umreifung 18 wahlweise durch ein einziges Umreifungsband 20 gebildet sein, das im Bereich von verbreiterten Mittelabschnitten 26 der Behälter 14 in horizontalem Verlauf um deren Außenseiten 16 gespannt und unter definierter Vorspannung - nachfolgend auch als Bandspannung bezeichnet - fixiert wurde, wodurch das Umreifungsgebinde 10 gemäß Fig. 2 gebildet ist. Wahlweise können die Behälter 14 jeweils im unteren Bereich, knapp oberhalb des Bodenbereichs 28, einen verbreiterten Außendurchmesser aufweisen, der dem Außenumfang im verbreiterten Mittelabschnitt 26 entsprechen kann, so dass die Behälter 14 bei gespanntem Umreifungsband 20 jeweils stabil mit jeweils vertikal orientierten Längserstreckungsrichtungen fixiert sind.

Die schematische Darstellung der Fig. 3 zeigt eine schematische Perspektivansicht eines Transportabschnittes 30 einer Vorrichtung 32 zur Förderung, Handhabung, Umreifung und/oder zur Verpackung einer Mehrzahl von Umreifungsgebinden 10 mit Horizontalfördereinrichtungen 34 zum Gebindetransport. Gezeigt ist eine Reihe von Umreifungsgebinden 10, die jeweils in Diagonalanordnung und mit Behälterformen entsprechend Fig. 1 ausgebildet sind. Die Gebinde 10 werden jeweils in regelmäßigen Abständen voneinander auf zwei parallelen Horizontalförderbändern 36 der Horizontalfördereinrichtung 34 in einer Transportrichtung 38 befördert, bspw. zwischen hier nicht gezeigten Umreifungseinrichtungen und hier ebenfalls nicht näher gezeigten nachfolgenden Verpackungs- und/oder Palettierstationen der Vorrichtung 32. Weiterhin zeigt die Darstellung der Fig. 3 zwei Einrichtungen 40 zur Auslenkung der Umreifungsbänder 20 der Gebinde 10 auf, die jeweils durch Schieberelemente 42 mit Linearantrieben gebildet sind. Die Einrichtungen 40 bzw. Schieberelemente 42 sind jeweils Teil einer Messeinrichtung, die einer Erfassung der Bandspannung der Umreifungsbänder 20 der Umreifungsgebinde 10 während ihres Transports in Transportrichtung 38 dient. Die in den nachfolgenden Figuren näher erläuterten Schieberelemente 42 weisen jeweils einen Linearantrieb zur Verschiebung eines Kolbens mit stirnseitig daran angeordnetem Messkopf auf, mit dem mittels einer senkrechten Zustellbewegung das Umreifungsband 20 der Gebinde 10 eingedrückt werden kann. Durch Erfassung eines Zusammenhangs zwischen der Eindrückung und der hierfür benötigten Stellkraft kann die Bandspannung am jeweiligen Gebinde 10 ermittelt bzw. errechnet werden. Zu diesem Zweck weist die nachfolgend näher beschriebene Messeinrichtung jeweils Einrichtungen zur Kraft- und/oder Wegmessung an der Auslenkungseinrichtung 40 auf, die während der Auslenkung der Kolben mit den Messköpfen und während der Eindrückung der Umreifungsbänder 20 die Wege und Kräfte erfassen und an eine hier nicht dargestellte Auswerteschaltung bzw. Auswerteeinrichtung liefern.

Die Schieberelemente 42 sind jeweils annähernd fluchtend auf gleicher Höhe angeordnet, so dass die auf den parallelen Horizontalförderbändern 36 in Transportrichtung 38 bewegten Gebinde 10 jeweils bei ihrem Passieren der Auslenkeinrichtungen 40 hinsichtlich der Bandspannung ihrer Umreifungsbänder 20 überprüft werden können, um auf diese Weise die Qualität der Umreifungen 18 der Gebinde 10 beurteilen zu können. Damit die Gebinde 10 durch die seitliche Krafteinwirkung, die bei der seitlich wirkenden Kraftbeaufschlagung der Umreifungsbänder 20 mit den Messköpfen der Schieberelemente 42 nicht auf den Horizontalförderbändern 36 nach außen verschoben werden können, können die in Fig. 3 angedeuteten Leitflächen 44 oder Führungsschienen vorhanden sein, an denen sich die Gebinde 10 ggf. seitlich anlegen und dort entlang gleiten können, während ihre Bandspannung durch Einwirkung der Auslenkelemente 40 ermittelt wird.

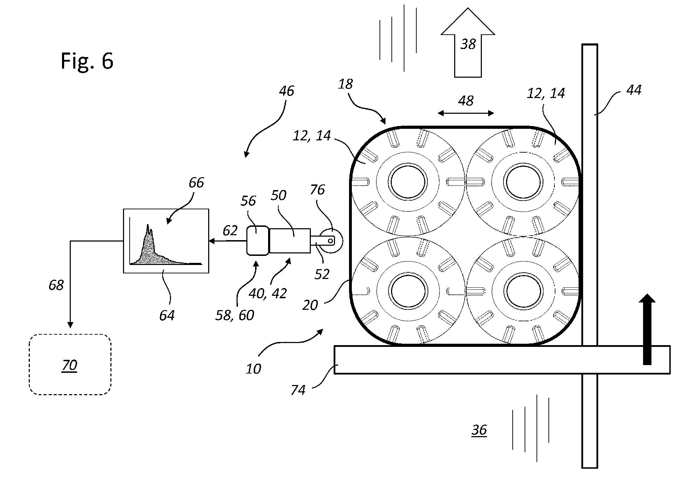

Allerdings sollte erwähnt werden, dass die in den Figuren 3 bis 6 gezeigten Leitflächen 44 lediglich eine mögliche Ausführungsvariante verdeutlichen und nicht zwingend erforderlich sind. So ist es auch möglich, den Gebindetransport und die erwähnten Bandspannungsmessungen ohne solche Leitflächen 44 oder Führungsschienen durchzuführen, wenn die von den Schieberelementen 42 auf die Bänder 20 ausgeübten Auslenkungskräfte geringer sind als die Haftreibungskräfte zwischen den Unterseiten der Gebinde 10 und den Auflageflächen auf den Horizontalförderbändern 36, wenn also die Auslenkungskräfte nicht ausreichen, um die Gebinde 10 auf den Förderbändern 36 zu verschieben. Die gezeigten Leitflächen 44 oder Führungsschienen sind im Zusammenhang mit einer Schubstange 74 (vgl. z.B. Fig. 6) besonders bei den Varianten mit drehbar gelagerten Rollen 76 (Fig. 6 bis Fig. 7e) sinnvoll einzusetzen, vor allem dann, wenn nicht nur an einer bestimmten Stelle zwischen zwei benachbarten Behältern 14 gemessen wird, sondern wenn sich die Messung über ein längeres Teilstück oder das gesamte seitliche Gebindeprofil erstrecken soll.

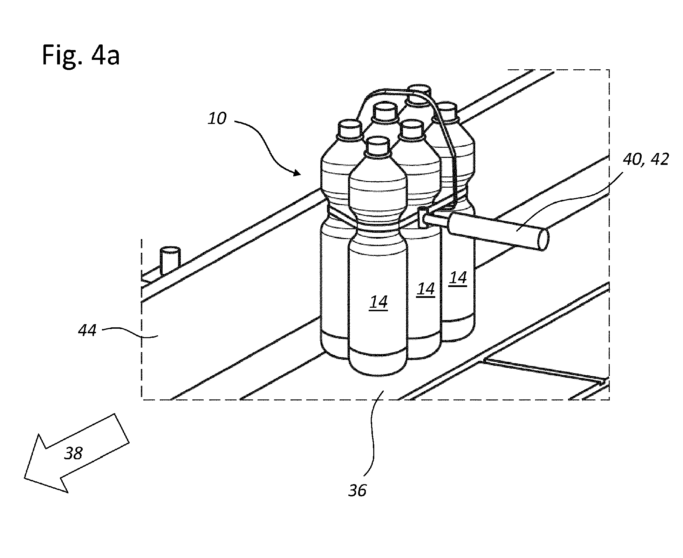

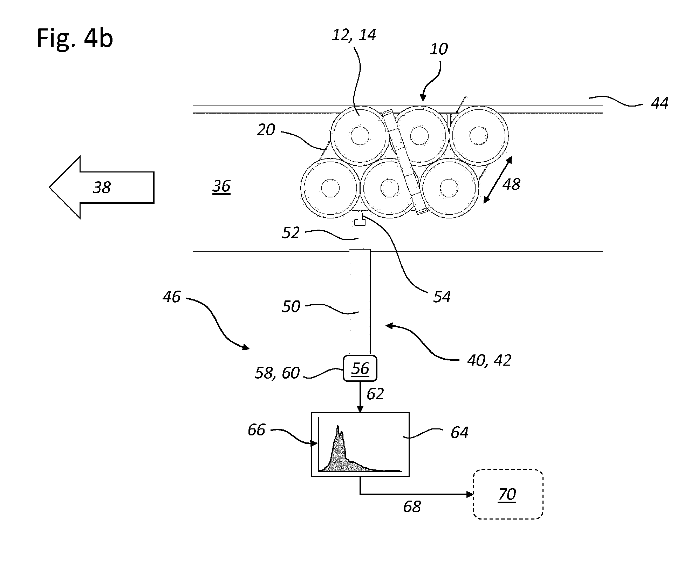

Die schematische Perspektivansicht der Fig. 4a und die Draufsicht der Fig. 4b, die jeweils ein 3x2-Gebinde 10 mit insgesamt sechs Behältern 14 bzw. Artikeln 12 zeigen, verdeutlichen die wesentlichen Komponenten der erfindungsgemäßen Messanordnung 46, die der Erfassung der Bandspannung 48 am Umreifungsgebinde 10 dient. Die Messanordnung 46 umfasst die bereits anhand der Fig. 3 beschriebene Einrichtung 40 zur Auslenkung eines Umreifungsbandes 20 der jeweils in Transportrichtung 38 auf dem Horizontalförderband 36 transportierten Gebinde 10. Die Einrichtung 40 mit ihrem Schieberelement 42 ermöglicht die Eindrückung des Umreifungsbandes 20 in senkrechter Richtung, hin zu den Leitflächen 44, die seitlich an den Horizontalförderbändern 36 angeordnet sind und der Führung der Gebinde 10 bei ihrem Transport und bei der Messung der Bandspannung 48 dienen. Wie es insbesondere die Fig. 4b erkennen lässt, umfasst das Schieberelement 42 ein Zylindergehäuse 50 mit darin geführtem Kolben 52, an dessen stirnseitigen Ende sich ein Messkopf 54 zum kontrollierten Eindrücken des Umreifungsbandes 20 befindet, der durch eine lineare Bewegung des Kolbens 52 mit definierter Stellkraft und/oder definiertem Stellweg auf das Umreifungsband 20 eine Ermittlung der Bandspannung 48 des jeweiligen Umreifungsgebindes 10 ermöglicht.

Ein Teil der Messanordnung 46 ist durch eine Einrichtung 56 zur Erfassung der Stellbewegung des Kolbens 52 und/oder zur Erfassung der mit dem Kolben 52 und dem Messkopf 54 auf das Umreifungsband 20 ausgeübten Stellkraft gebildet, die je nach erfasstem Messparameter bspw. durch einen Wegsensor 58, einen Kraftsensor 60, einen Drucksensor oder einen anderen geeigneten Sensor gebildet sein kann. Die Sensorsignale 62 der Einrichtung 56 bzw. des Sensors 58 oder 60 werden an eine Auswerteeinrichtung 64 übermittelt, die wahlweise über eine Anzeigeeinrichtung 66 verfügen kann, insbesondere jedoch Steuersignale 68 generiert, um weitere, hier nicht dargestellte Maschinenkomponenten 70 anzusteuern, die bspw. für eine Ausschleusung oder Aussonderung von solchen Umreifungsgebinden 10 sorgen können, deren Bandspannung 48 von der Auswerteeinrichtung 64 als unzureichend oder als zu hoch erkannt und klassifiziert wurde.

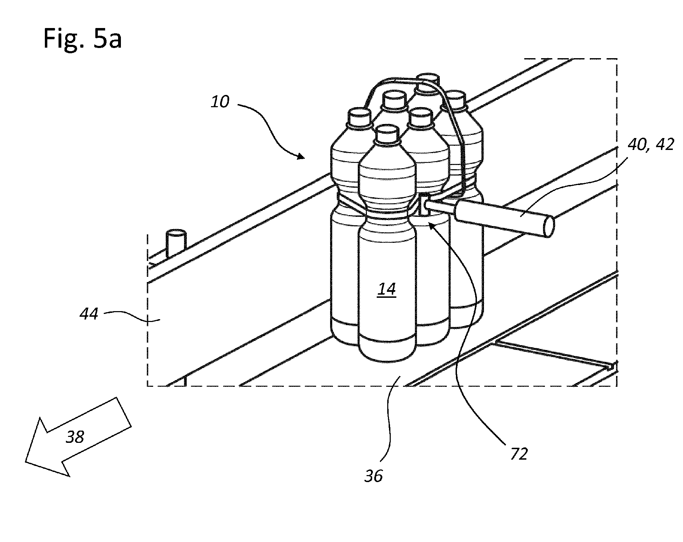

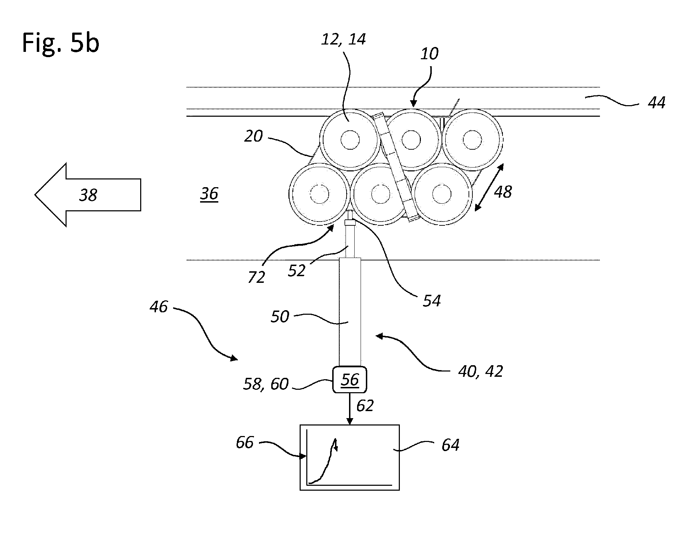

Die schematischen Darstellungen der Figuren 5a und 5b zeigen in verschiedenen Ansichten die Funktions- und Wirkungsweise der Messanordnung 46 zur Gewinnung von Messwerten über die Bandspannung 48 des Umreifungsbandes 20, das um die Artikel 12 bzw. Behälter 14 des Umreifungsgebindes 10 gespannt ist. In der perspektivischen Ansicht der Fig. 5a und in der schematischen Draufsicht der Fig. 5b wird die Einrichtung 40 zur Auslenkung des Umreifungsbandes 20 dadurch aktiviert, dass der Kolben 52 mit dem stirnseitig angeordneten Messkopf 54 aus dem Zylindergehäuse 50 geschoben und senkrecht auf das Umreifungsband 20 eines in Reichweite des Schieberelements 42 befindlichen Umreifungsgebindes 10 gedrückt wird, wodurch dieses an einer Messstelle 72 eingedrückt und die Bandspannung 48 durch Auswertung der Sensorsignale 62 der Erfassungseinrichtung 56 ermittelt wird. Sinnvollerweise befindet sich die Messstelle 72, an der das Umreifungsband 20 mit dem Messkopf 54 eingedrückt wird, in einer Position, die annähernd der Mitte zwischen zwei benachbarten Artikeln 12 oder Behältern 14 entspricht, wo die Umreifung 18 nicht an den Außenseiten 16 der Behälter 14 anliegt, sondern über einen Zwischenraum gespannt ist.

Die schematische Draufsicht der Fig. 6 verdeutlicht eine weitere Ausführungsvariante des erfindungsgemäßen Messverfahrens zur Ermittlung der Bandspannung 48 an Umreifungsgebinden 10. Im gezeigten Ausführungsbeispiel wird ein Umreifungsgebinde 10 mit vier umreiften Artikeln 12 bzw. Behältern 14 in Rechteckanordnung mittels einer Schubstange 74 entlang der Führungsschiene 44 in Transportrichtung 38 geschoben. Wahlweise kann die Beförderung des Gebindes 10 in Transportrichtung 38 auch durch die Förderbewegung der Auflagefläche des Horizontalförderbandes 36 erfolgen. Die Messanordnung 46 weist einen ähnlichen Aufbau auf wie bei den zuvor gezeigten Ausführungsbeispielen (Fig. 3, Figuren 4a bis 5b). Der Messkopf 54 am stirnseitigen Ende der Kolbenstange 52 des Schieberelements 42 ist bei dieser Variante allerdings durch eine drehbar gelagerte Rolle 76 gebildet, die auf der Oberfläche des Umreifungsbandes 20 abrollen kann, während das Gebinde 10 in Transportrichtung 38 am feststehenden Schieberelement 42 vorbeibewegt wird. Der übrige Aufbau der Einrichtung 40 zur Auslenkung des Umreifungsbandes 20 bzw. des Schieberelements 42 mit der im Zylindergehäuse 50 in senkrechter Richtung zur Transportrichtung 38 des Gebindes 10 verschiebbaren Kolbenstange 52 mit der stirnseitig daran drehbar gelagerten Rolle 76 stimmt mit den zuvor gezeigten Ausführungsvarianten weitgehend überein.

Der Einrichtung 40 zur Auslenkung des Umreifungsbandes 20 ist die Einrichtung 56 zur Erfassung einer Stellbewegung und/oder einer Stellkraft zugeordnet, je nach praktiziertem Messprinzip gebildet durch einen Wegsensor 58 oder einen Kraftsensor 60. Der Sensor 58 bzw. 60 liefert sein Ausgangssignal 62 in der zuvor beschriebenen Weise an die Auswerteeinrichtung 64, die wahlweise eine Anzeigeeinrichtung 66 ansteuert und zudem ein Ausgangssignal 68 zur Lieferung eines Wertes für die Bandspannung 48 und/oder zur Ansteuerung der Maschinenkomponente 70, bspw. ein Schieber einer Ausschleuseinrichtung o. dgl., liefert. Das mit der Anzeigeeinrichtung 66 beispielhaft visualisierte Ausgangssignal 62 kann einen Wert anzeigen, dessen Amplitude eine Aussage über die effektive Bandspannung 48 liefern kann.

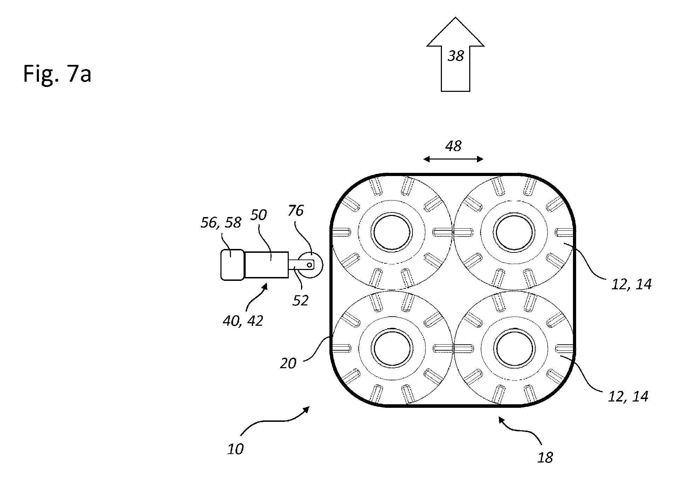

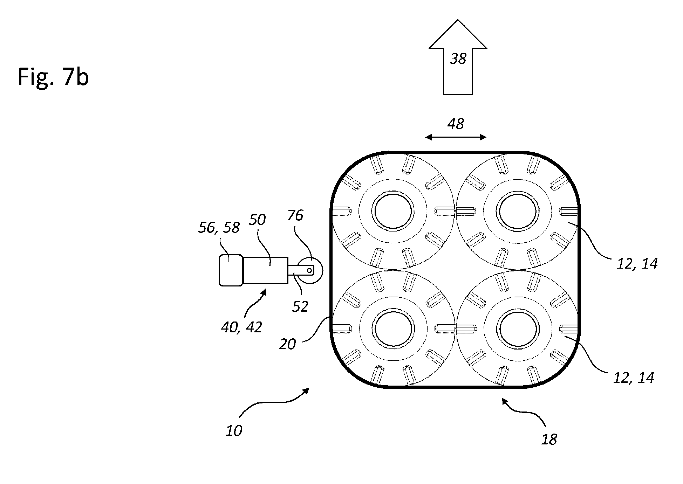

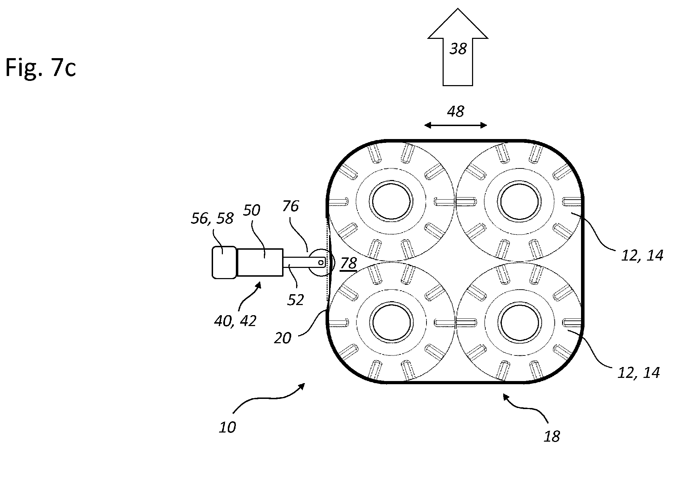

Die schematischen Darstellungen der Figuren 7a bis 7e zeigen anhand einer beispielhaften Wegmessung bei konstanter Stellkraft mehrere aufeinander folgende Prozessschritte eines Messvorganges zur Erfassung der Bandspannung 48 des Umreifungsbandes 20 des Gebindes 10. Das Gebinde 10 bewegt sich in Transportrichtung 38 und nähert sich dabei der Auslenkungseinrichtung 40 (Fig. 4a). Das Schieberelement 42 wird sinnvollerweise erst aktiviert, sobald das Gebinde 10 eine geeignete Position für die Messung erreicht hat (Fig. 7b), auch wenn die stirnseitig an der Kolbenstange 52 angeordnete drehbare Rolle 76 eine gewisse Toleranz hinsichtlich der Positionierung erlaubt, da die Rolle 76 während der Bewegung des Gebindes 10 und während des Messvorganges weitgehend reibungsfrei auf der Außenseite des Umreifungsbandes 20 abrollen kann. Die Aktivierung des Schieberelements 42 sorgt für die lineare Auslenkung der Kolbenstange 52 und die Zustellung der Rolle 76 auf das Umreifungsband 20, das durch Aufbringung einer weitgehend konstanten Stellkraft nach innen gedrückt wird (Fig. 7c). Die bevorzugte Position für diese Bandspannungsmessung befindet sich vorzugsweise ungefähr mittig im Bereich eines Zwischenraums 78 zwischen benachbarten Behältern 14, da hier das Band 20 die weiteste Auslenkung erfahren kann.

Alternativ wäre es auch denkbar, dass das Schieberelement 42 über die gesamte Länge des Gebindes 10 oder einem Teilstück mit konstanter Kraft andrückt und das Seitenprofil erfasst wird. Darüber hinaus könnte die Messung auch dergestalt ablaufen, dass das Schieberelement 42 immer dann, wenn gerade kein Gebinde 10 in seinem Bewegungsbereich vorhanden ist, auf seine maximale Ausschubstellung ausgefahren ist und erst durch das Gebinde 10, ggf. in Zusammenwirkung mit der Leitfläche 44 und der Schubstange 74, zurückgeschoben wird. In diesem Fall müssen natürlich die Geometrien (Schiebeweg, Behälterradius und Rollenradius) auf eine solche Messung abgestimmt sein, damit das Schieberelement 42 und seine Rolle 76 nicht blockierend auf den Gebindetransport wirken.

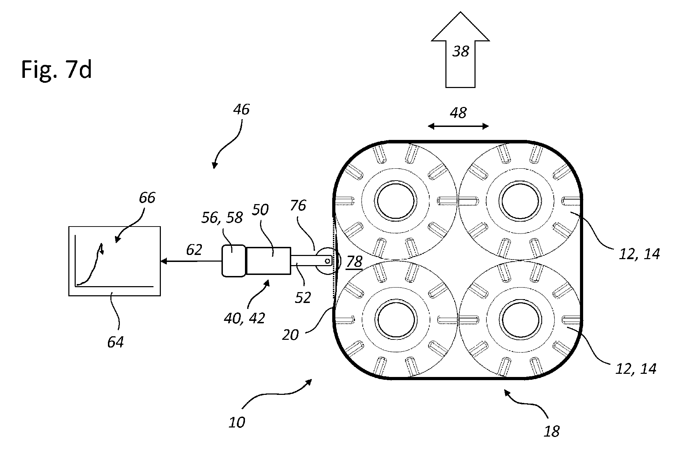

Da bei dieser Messvariante eine Maximalkraft für die Linearauslenkung der Kolbenstange 52 zur Eindrückung des Umreifungsbandes 20 vorgegeben ist, definiert die herrschende Bandspannung 48 die maximal erreichbare Auslenkung, d.h. den Ausschubweg, den die Kolbenstange 52 aus dem Zylindergehäuse 50 ausgefahren werden kann. Diese maximale Auslenkung wird mit dem Wegsensor 58 erfasst, der ein Ausgangssignal 62 generiert, das an die Auswerteeinrichtung 64 übermittelt wird, u.a. zur Generierung einer Messwertanzeige mittels der Anzeigeeinrichtung 66, wie es die Fig. 7d schematisch verdeutlicht.

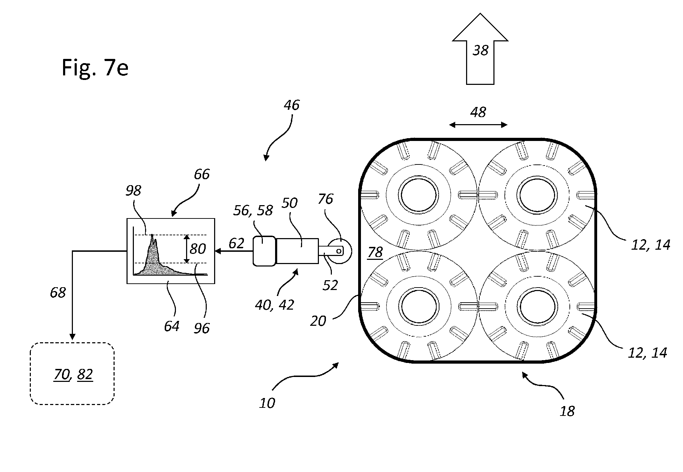

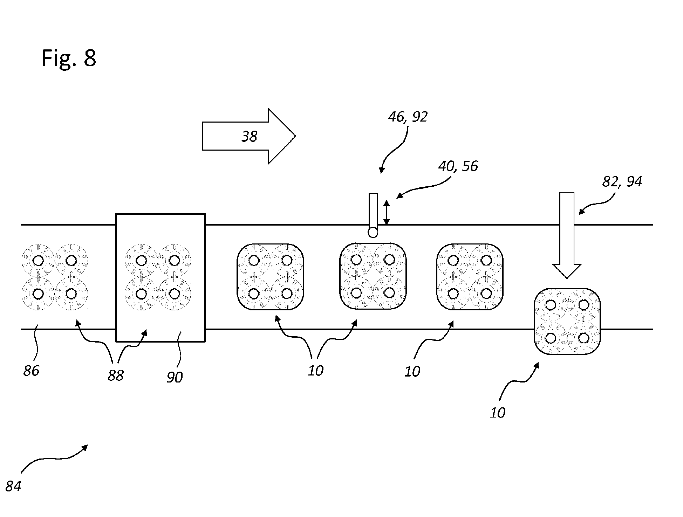

Nach Beendigung der Messung, Erfassung der Bandspannung 48 und erfolgter Auswertung des Ausgangssignals 62 des Wegsensors 58 am Schieberelement 42 kann gemäß Fig. 7e ein geeignetes Steuersignal 68 zur Ansteuerung der mit der Bezugsziffer 70 bezeichneten weiteren Maschinenkomponente generiert werden. Sofern die durch Auswertung des Ausgangssignals 62 gemessene Bandspannung 48 nicht innerhalb eines definierten Sollwertbereichs 80 liegt, der durch zwei horizontale Linien im Bereich der Anzeigeeinrichtung 66 angedeutet ist, ist die Bandspannung 48 entweder unzureichend oder zu hoch, was beides einen Qualitätsmangel des betroffenen Umreifungsgebindes 10 anzeigt. Sofern das gemessene Signal außerhalb des vorgebbaren Sollwertbereichs 80 liegt, kann das Steuersignal 68 bspw. zur Ansteuerung eines geeigneten, hier nicht näher dargestellten, aber in Fig. 8 beispielhaft gezeigten Schiebers 82 oder anderen Aktors dienen, mit dem das betroffene Gebinde 10 aus dem Förderstrom einer Mehrzahl von hintereinander transportierten Gebinden 10 ausgesondert bzw. ausgeschleust werden kann.

Der in Fig. 7e angedeutete Sollwertbereich 80 definiert einen Bereich der Auslenkung der Kolbenstange 52 mit einem unteren Schwellwert 96, der eine relativ geringe Auslenkung anzeigt, die bei gegebener Stellkraft und einer hohen Bandspannung 48 zu erzielen ist. Ein oberer Schwellwert 98 für die gemessene Auslenkung der Kolbenstange 52 begrenzt den Sollwertbereich 80 nach oben hin. Sofern dieser obere Schwellwert 98 überschritten wird, ist die Bandspannung 48 zu niedrig, so dass sich das Umreifungsband 20 zu stark eindrücken und auslenken lässt. Der obere Schwellwert 98 wird allerdings auch dann überschritten, wenn kein Band 20 vorhanden ist, so dass die Kolbenstange 52 mit der daran angeordneten Rolle 76 keinen nennenswerten Widerstand findet.

Die schematische Darstellung der Fig. 8 zeigt die wichtigsten Komponenten einer Vorrichtung 84 zur Herstellung von Umreifungsgebinden 10, wie sie zuvor beschrieben wurden. Die Vorrichtung umfasst eine Fördereinrichtung 86 zur ununterbrochenen oder zyklischen Förderung von Artikel- oder Behältergruppen 88 in Transportrichtung 38 zu einer Umreifungseinrichtung 90, die zur Aufbringung von einem, zwei oder mehr gleichartigen oder unterschiedlichen Umreifungsbändern 20 um die Außenseiten der Artikel- oder Behältergruppen 88 unter gleichzeitiger Aufbringung einer definierbaren Bandspannung und anschließender Fixierung von Bandenden aneinander zur Herstellung der Umreifung 18 vorgesehen und ausgestattet ist. In Transportrichtung 38 schließt sich an die Umreifungseinrichtung 90 eine oben im Zusammenhang mit der Messanordnung 46 erwähnte Messeinrichtung 92 zur Erfassung der Bandspannung an, welche die erwähnte Einrichtung 40 zur Auslenkung des Umreifungsbandes 20 der Umreifung 18 des Gebindes 10 sowie eine Einrichtung 56 zur Erfassung einer Stellbewegung und/oder einer Stellkraft des Schieberelements 42 aufweist. Im gezeigten Ausführungsbeispiel der Fig. 8 ist die Einrichtung 40 durch ein linear bewegliches Schieberelement 42 (vgl. Fig. 3, Figuren 4a bis 5b) gebildet; sie kann jedoch wahlweise auch ein Schieberelement 42 mit Rolle 76 gemäß Fig. 6 (vgl. auch Figuren 7a bis 7e) aufweisen oder anders ausgebildet sein.

Das in Fig. 8 gezeigte Ausführungsbeispiel der Vorrichtung 84 zeigt weiterhin eine steuerbare Ausschleuseinrichtung 94, die einen Schieber 82, wie er bspw. in Fig. 8 gezeigt wurde, umfasst, der solche Gebinde 10 aus dem Förderstrom aussondert, deren Bandspannung 48 nicht innerhalb des vorgegebenen Sollwertbereichs 80 liegt. Das Ausschieben eines solchen Gebindes 10 kann bspw. senkrecht zur Transportrichtung 38, wahlweise jedoch auch in andere Richtung erfolgen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Gebinde, Umreifungsgebinde
- 12: Artikel
- 14: Behälter, PET-Behälter
- 16: Außenseite
- 18: Umreifung
- 20: Umreifungsband
- 22: Tragegriff
- 24: Griffmulde
- 26: Mittelabschnitt
- 28: Bodenbereich
- 30: Transportabschnitt
- 32: Vorrichtung zur Förderung, Handhabung, Umreifung und/oder Verpackung von Umreifungsgebinden
- 34: Horizontalfördereinrichtung
- 36: Horizontalförderband
- 38: Transportrichtung
- 40: Einrichtung zur Auslenkung (der Umreifungsbänder), Auslenkeinrichtung
- 42: Schieberelement
- 44: Leitfläche, Führungsschiene
- 46: Messanordnung
- 48: Bandspannung
- 50: Zylindergehäuse
- 52: Kolben, Kolbenstange
- 54: Messkopf
- 56: Einrichtung zur Erfassung einer Stellbewegung und/oder einer Stellkraft (des Kolbens)
- 58: Wegsensor
- 60: Kraftsensor
- 62: Sensorsignale
- 64: Auswerteeinrichtung
- 66: Anzeigeeinrichtung
- 68: Steuersignale
- 70: Maschinenkomponenten
- 72: Messstelle
- 74: Schubstange
- 76: Rolle (Messkopf)
- 78: Zwischenraum (zwischen benachbarten Behältern)
- 80: Sollwertbereich (Umreifungsspannung)
- 82: Schieber
- 84: Vorrichtung zur Herstellung von Umreifungsgebinden
- 86: Fördereinrichtung
- 88: Behältergruppe, Artikelgruppe
- 90: Umreifungseinrichtung
- 92: Messeinrichtung
- 94: Ausschleuseinrichtung
- 96: unserer Schwellwert
- 98: oberer Schwellwert

## Patentansprüche

1. Verfahren zur Herstellung von Umreifungsgebinden (10), bei dem jeweils mindestens zwei Artikel (12) oder Behälter (14) mit wenigstens einer horizontal um jeweilige Außenseiten der Artikel (12) oder Behälter (14) gespannten, band- oder streifenartigen, geschlossenen Umreifung (18) zusammengehalten und miteinander verbunden werden, welche Umreifung (18) durch ein, zwei oder mehr gleichartige oder unterschiedliche Umreifungsbänder (20) aus Kunststoff oder einem Verbundmaterial gebildet werden, deren Enden unter Aufbringung einer definierbaren Bandspannung (48) aneinander fixiert werden, wonach die Bandspannung (48) des wenigstens einen Umreifungsbandes (20) der Umreifung (18) durch eine mechanische Auslenkung des Umreifungsbandes (20) unter gleichzeitiger Erfassung eines Zusammenhanges zwischen dem Auslenkungsweg und einer hierfür aufzuwendenden Auslenkungskraft gemessen wird.

2. Verfahren nach Anspruch 1, bei dem das Umreifungsband (20) um einen definierten maximalen Auslenkungsweg ausgelenkt und die hierfür aufzuwendende Auslenkungskraft gemessen wird.

3. Verfahren nach Anspruch 1, bei dem das Umreifungsband (20) mit einer definierten maximalen Auslenkungskraft ausgelenkt und der hierdurch erzielte Auslenkungsweg gemessen wird.

4. Verfahren nach einem der Ansprüche 1 bis 3, bei dem die Erfassung der Bandspannung (48) durch Auslenkung des Umreifungsbandes (20) innerhalb eines vorgebbaren Bandabschnittes erfolgt, der sich ungefähr mittig zwischen zwei benachbarten Artikeln (12) oder Behältern (14) des von der Umreifung (18) zusammengehaltenen Umreifungsgebindes (10) befindet.

5. Verfahren nach einem der Ansprüche 1 bis 4, bei dem die Bandspannung (48) wenigstens eines Umreifungsbandes (20) jedes Umreifungsgebindes (10) einer Folge von nacheinander umreiften und hintereinander transportierten Umreifungsgebinden (10) erfasst und zur Steuerung einer Ausschleuseinrichtung (70, 94) herangezogen werden, die solche Umreifungsgebinde (10) aus dem Gebindestrom aussondert, bei denen eine erfasste Bandspannung (48) außerhalb eines vorgebbaren Sollwertbereichs (80) liegt.

6. Vorrichtung (84) zur Herstellung von Umreifungsgebinden (10), die jeweils mindestens zwei Artikel (12) oder Behälter (14) mit wenigstens einer horizontal um Außenseiten der Artikel (12) oder Behälter (14) gespannten, band- oder streifenartigen, geschlossenen Umreifung (18) zur Verbindung und Fixierung der Artikel (12) oder Behälter (14) aneinander umfassen, mit einer Fördereinrichtung (86) zur ununterbrochenen oder zyklischen Förderung von Artikel- oder Behältergruppen (88) zu einer Umreifungseinrichtung (90), die zur Aufbringung von einem, zwei oder mehr gleichartigen oder unterschiedlichen Umreifungsbändern (20) aus Kunststoff oder einem Verbundmaterial um die Außenseiten (16) der Artikel (12) oder Behälter (14) unter gleichzeitiger Aufbringung einer definierbaren Bandspannung (48) und anschließender Fixierung von Bandenden aneinander zur Herstellung der Umreifung (18) vorbereitet und ausgestattet ist, und mit einer Messeinrichtung (92) zur Erfassung der Bandspannung (48), die eine Einrichtung (40) zur Auslenkung des wenigstens einen Umreifungsbandes (20) der Umreifung (18) sowie eine Einrichtung (56) zur Kraft- und/oder Wegmessung an der Auslenkungseinrichtung (40) während deren Auslenkung aufweist.

7. Vorrichtung nach Anspruch 6, bei der die Einrichtung (40) zur Auslenkung des Umreifungsbandes (20) ein linear oder rotatorisch bewegliches, mechanisch wirkendes Schieberelement (42) umfasst.

8. Vorrichtung nach Anspruch 6 oder 7, bei der die Einrichtung (56) zur Kraft- und/oder Wegmessung einen Wegsensor (58), einen Kraftsensor (60) und/oder einen Drucksensor umfasst, der/die mit einer Auswerteschaltung (64) zur Erfassung und Auswertung der Sensorsignale (62) und zur Herleitung der Bandspannung (48) gekoppelt ist/sind und/oder der/die der Einrichtung (40) zur Auslenkung des Umreifungsbandes (20) zugeordnet und/oder dort integriert ist/sind.

9. Vorrichtung nach einem der Ansprüche 6 bis 8, die mit einer steuerbaren Ausschleuseinrichtung (94) gekoppelt ist, die solche Umreifungsgebinde (10) aus dem Gebindestrom aussondert, bei denen eine erfasste Bandspannung (48) außerhalb eines vorgebbaren Sollwertbereichs (80) liegt.

10. Messanordnung (46) zur Erfassung einer Bandspannung (48) von Umreifungsgebinden (10), die jeweils mindestens zwei Artikel (12) oder Behälter (14) mit wenigstens einer horizontal um Außenseiten der Artikel (12) oder Behälter (14) gespannten, band- oder streifenartigen, geschlossenen Umreifung (18) zur Verbindung und Fixierung der Artikel (12) oder Behälter (14) aneinander umfassen, welche Messanordnung (46) eine Einrichtung (40) zur Auslenkung des wenigstens einen Umreifungsbandes (20) der Umreifung (18) sowie eine Einrichtung (56) zur Kraft- und/oder Wegmessung während der Auslenkung aufweist.

11. Messanordnung nach Anspruch 10, bei der die Einrichtung (40) zur Auslenkung des Umreifungsbandes (20) ein linear oder rotatorisch bewegliches, mechanisch wirkendes Schieberelement (42) umfasst, und bei der die Einrichtung (56) zur Kraft- und/oder Wegmessung einen Kraftsensor (60), einen Drucksensor und/oder einen Wegsensor (58) umfasst, der/die mit einer Auswerteschaltung (64) zur Erfassung und Auswertung der Sensorsignale (62) und zur Herleitung der Bandspannung (48) gekoppelt ist/sind.

12. Messanordnung nach Anspruch 10 oder 11, bei welcher die Einrichtung (56) zur Kraft- und/oder Wegmessung der Einrichtung (40) zur Auslenkung des Umreifungsbandes (20) zugeordnet und/oder dort integriert ist.

13. Verfahren zur Erfassung einer Bandspannung (48) von Umreifungsgebinden (10), die jeweils mindestens zwei Artikel (12) oder Behälter (14) umfassen, die mit wenigstens einer horizontal um die Außenseiten der Artikel (12) oder Behälter (14) gespannten, band- oder streifenartigen, geschlossenen Umreifung (18) zusammengehalten und miteinander verbunden sind, wobei die Umreifung (18) durch ein, zwei oder mehr gleichartige oder unterschiedliche Umreifungsbänder (20) aus Kunststoff oder einem Verbundmaterial gebildet ist, deren Enden mit definierbarer Bandspannung (48) aneinander fixiert sind, wobei die Bandspannung (48) des wenigstens einen Umreifungsbandes (20) der Umreifung (18) durch eine mechanische Auslenkung des Umreifungsbandes (20) unter gleichzeitiger Erfassung eines Zusammenhanges zwischen dem Auslenkungsweg und einer hierfür aufzuwendenden Auslenkungskraft gemessen wird.
